Europäisches Patentamt

European Patent Office

Office européen des brevets

(19)

(11) Veröffentlichungsnummer: **0 049 707**
**B1**

(12) **EUROPÄISCHE PATENTSCHRIFT**

(45) Veröffentlichungstag der Patentschrift:
**04.04.84**

(51) Int. Cl.³: **D 03 C 1/00,** F 16 D 11/06

(21) Anmeldenummer: **80106177.1**

(22) Anmeldetag: **10.10.80**

(54) Kupplungsanordnung zum Steuern der Schäfte einer Webmaschine.

(43) Veröffentlichungstag der Anmeldung:
**21.04.82 Patentblatt 82/16**

(45) Bekanntmachung des Hinweises auf die Patenterteilung:
**04.04.84 Patentblatt 84/14**

(84) Benannte Vertragsstaaten:
**CH DE FR IT**

(56) Entgegenhaltungen:
**DE - A - 2 741 199**
**DE - A - 2 741 200**

(73) Patentinhaber: **GEBRÜDER SULZER AKTIENGESELLSCHAFT, Zürcherstrasse 9, CH-8401 Winterthur (CH)**

(72) Erfinder: **Jülich, Werner, Riedenerstrasse 74, CH-8304 Wallisellen (CH)**
Erfinder: **Müller, Günter, Leingrüblerstrasse 8, CH-8542 Wiesendangen (CH)**

BUNDESDRUCKEREI BERLIN

## Kupplungsanordnung zum Steuern der Schäfte
### einer Webmaschine

Die Erfindung bezieht sich auf eine Kupplungsanordnung zum Steuern der Schäfte einer Webmaschine, mit einer mindestens eine Nut aufweisenden, intermittierend drehenden Antriebswelle und einer in die Nut einkuppelbaren, auf einem auf der Antriebswelle drehbar gelagerten Exzenter angeordneten Klinke sowie mit einer den Exzenter umschließenden Lasche einer Kurbelstange für den Abtrieb zu den Schäften und mindestens einem in den Weg der Klinke bewegbaren, sie auskuppelnden Steuerhebel, welcher von einer in einen Hubmessertrieb einkuppelbaren Platine hin- und herverschwenkbar ist.

Bei einer bekannten Anordnung dieser Art (DE-AS 2 741 199) besteht keine unmittelbare Kooperation zwischen den Steuerhebeln und der Lasche. Wenn im Krafttrieb der Steuerhebel oder in der zugehörigen Selektionseinrichtung (Elektromagnet mit Anker) irgendein Defekt eintritt oder wenn beispielsweise eine Bedienungsperson während des Betriebes gewisse Manipulationen im Wirkungsbereich der Steuerhebel vornimmt, können die Steuerhebel bei jeder Position des Exzenters und der auf ihm angeordneten Teile in die Wirkungsposition einwärts verschwenkt werden. Dadurch sind gewisse Teile der Kupplungsanordnung, insbesondere die Klinke und weitere, mit ihr kooperierende Glieder gefährdet, weil gegebenenfalls einer der Steuerhebel oder beide Steuerhebel zu einem unerwünschten Zeitpunkt in den Umlaufbereich der auf dem Exzenter angeordneten Teile gelangen können. Dadurch können die Klinke oder andere Teile durch die eingeschwenkten Steuerhebel beschädigt bzw. zerschlagen werden.

Der Erfindung liegt die Aufgabe zugrunde, eine besonders in dieser Hinsicht verbesserte Anordnung zu schaffen.

Die Erfindung besteht darin, daß die Lasche mindestens ein gegenüber dem in den Weg der Klinke einschwenkbaren Arm des Steuerhebels angeordnetes, mit dem Steuerhebel zusammenarbeitendes Anschlagelement trägt zum Auswärtshalten des Steuerhebels in wirkungsloser Position während eines bestimmten Bogenabschnittes der Bewegung der Lasche. Es läßt sich auf diese Weise vermeiden, daß der bzw. die Steuerhebel zu einem unbeabsichtigten Zeitpunkt bzw. Zeitabschnitt des Arbeitsspieles — etwa bei Beschädigung im Hubmessertrieb oder in der Selektionseinrichtung oder auch bei unachtsamen Manipulationen der Bedienungsperson — in den Weg von auf dem Exzenter angeordneten, umlaufenden Teilen wie insbesondere in den Weg einer Verriegelungseinrichtung für die Klinke oder der nicht in Bereitschaftsposition zum Auskuppeln befindlichen Klinke selbst gelangen können. Bestimmte auf dem Exzenter angeordnete, mit ihm umlaufende Teile werden daduch vor Beschädigung gesichert. Die Steuerhebel können nur zu demjenigen Zeitpunkt in Wirkungsposition einwärts geschwenkt werden, wo die Klinke mit ihrem auszuschwenkenden Ende auf einen der eingeschwenkten Steuerhebel zu läuft.

Ferner läßt sich auch erreichen, daß der Hub des zugehörigen Hubmessertriebs für die Steuerhebel geringer gehalten werden kann; insbesondere kann der der wirkungslosen Ausschwenkposition der Steuerhebel entsprechende Umkehrpunkt des Hubmessers des Hubmessertriebes geringeren Ausschlag aufweisen, weil der jeweils letzte Abschnitt der Ausschwenkbewegung der Steuerhebel durch eines der auf der Lasche angeordneten Anschlagelemente verursacht werden kann.

Die Steuerhebel können bei der erfindungsgemäßen Bauart durch die Lasche selbst unschädlich gemacht werden, so daß sie nur im erwünschten Zeitpunkt bzw. Zeitabschnitt in die Sperrstellung einwärts geschwenkt werden können, in der die Klinke auf sie zu läuft und anschließend in Auskupplungsstellung ausgeschwenkt werden soll.

Weitere Merkmale ergeben sich aus der folgenden Beschreibung von Ausführungsbeispielen in Verbindung mit der Zeichnung und den Ansprüchen.

Fig. 1 ist ein Schnitt durch eine erfindungsgemäß ausgebildete Kupplungsanordnung zur Steuerung von Webschäften einer Webmaschine,

Fig. 2 erläutert eine andere Position der Teile.

Eine von der Hauptwelle der Webmaschine aus absatzweise jeweils um 180° in Drehung versetzte Antriebswelle 1 enthält zwei Nuten 2, in welche die Nase 3 einer bei 4 schwenkbar gelagerten, unter Wirkung einer Zugfeder 60 stehenden Kupplungsklinke 5 eingreifen kann. Die Klinke 5 ist auf einem auf Welle 1 drehbar gelagerten Exzenter 6 gelagert, der von einer Lasche 7 umschlossen ist. Diese bildet das Ende einer Kurbelstange 10, welche bei 8 an einem Übertragungsgestänge 9 angelenkt ist, über das die gemäß Pfeil 11 entstehende Hin- und Herbewegung der Lasche 7 und Kurbelstange 10 auf einen zugehörigen Schaft einer Webmaschine übertragen wird.

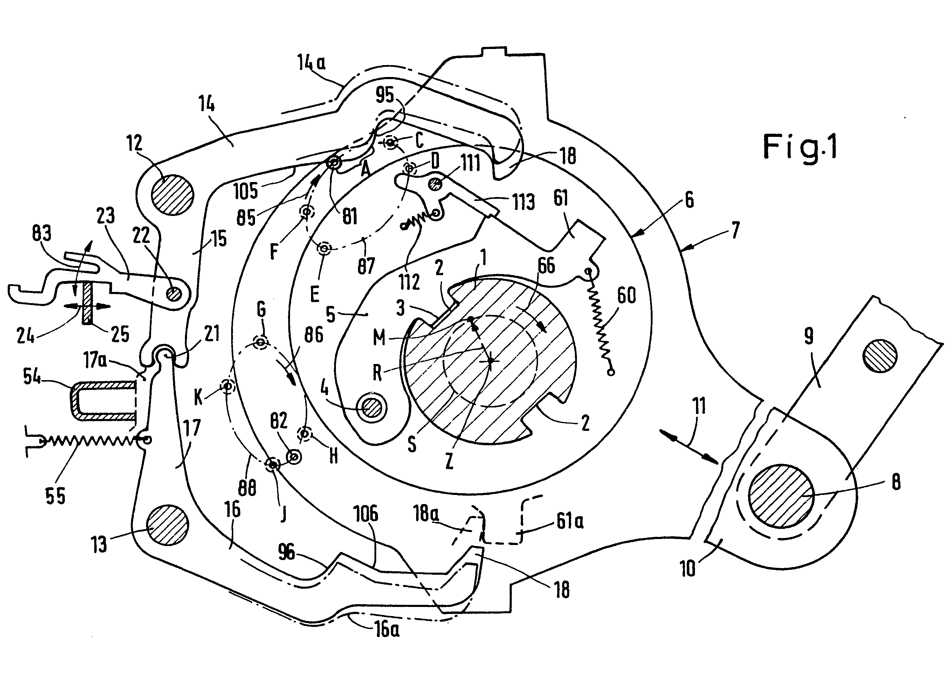

Auf Welle 1 sind eine ganze Anzahl, z. B. sechs bis zwölf der in Fig. 1 dargestellten Antriebsteile 6, 7 angeordnet, nämlich zu jedem Schaft der Webmaschine ein Exzenter 6 und eine Lasche 7. Die gesamten Teile 1, 6, 7 bilden die sogenannte Exzentermaschine für Antrieb und Steuerung sämtlicher Webschäfte der Webmaschine. Die Schäfte werden entsprechend einem Bindungsprogramm für die Kettfäden in Hoch- oder Tieffachstellung bewegt.

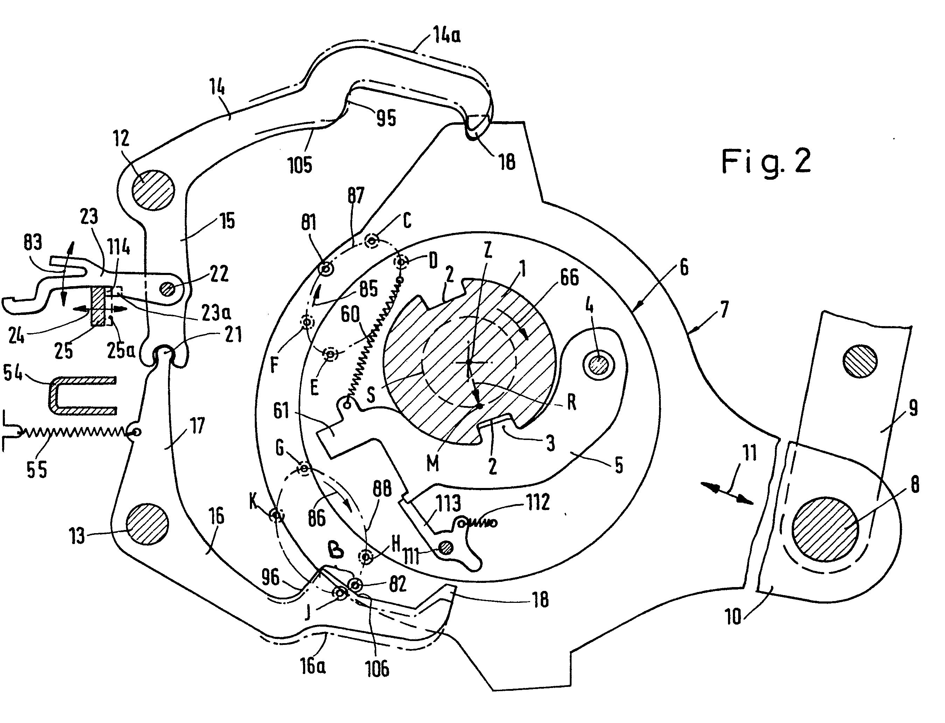

Zur Betätigung der Klinke 5 während des Betriebes sind zwei auf den ortsfesten Lagerzapfen 12, 13 schwenkbar gelagerte Steuerhebel 14, 15 bzw. 16, 17 eingebaut, die an den freien Enden Haken 18 aufweisen, welche in den Weg der Klinke 5 verschwenkt werden können. In Fig. 1 und 2 sind die Steuerhebel 14 bis 17 jeweils in einer mittleren Position (ausgezogen dargestellte Stellung) wiedergegeben. Es ist auch gezeigt, wie die Klinke 5 ausgekuppelt werden kann. Hierzu werden die Steuerhebel 14 bis 17 einwärtsgeschwenkt, so daß z. B. der in gestrichelter Position in Fig. 1 angedeutete Haken 18 in die Position 18a läuft. Wenn das Ende 61 der Klinke die gestrichelte Stellung 61a erreicht, wird Klinke 5 bei weiterer Drehung der Teile 1, 5 auswärts geschwenkt, so daß die Nase 3 aus der zugehörigen Nut 2 herausgezogen wird. Die Teile 5, 6, 7 sowie der zugehörige Webschaft stehen alsdann still. Welle 1 rotiert absatzweise weiter. Die beiden Steuerhebel sind mit den Armen 15, 17 bei 21 duch ein Gelenk verbunden.

Auf dem Arm 15 ist bei 22 eine Platine 23 schwenkbar gelagert, die mit einem gemäß Pfeil 24 hin- und herbewegten Hubmesser 25 — durch Auf- und Abwärtsheben der Platine 23 gemäß Pfeil 83 mittels einer nicht dargestellten Selektionseinrichtung — gekuppelt werden kann.

Auf der Lasche 7 sind zwei gegenüber den einschwenkbaren Armen 14, 16 befindliche Anschlagrollen 81, 82 angeordnet, die während der Drehung des Exzenters 6 und der zugehörigen Bewegung der Lasche 7 entsprechende, ovalförmige Bahnen 87, 88 (Pfeile 85, 86) ausführen, welche in Fig. 1 und 2 strichpunktiert angedeutet sind. Rolle 81 vermag mit der Auflaufkurve 105 des Steuerhebels 14, 15, Rolle 82 mit der Auflaufkurve 106 des Steuerhebels 16, 17 zu kooperieren. Bei Anlauf auf eine der Kanten 105, 106 werden die Steuerhebel in die in Fig. 1 und 2 strichpunktiert dargestellte, äußerste, wirkungslose Position 14a, 16a auswärts verschwenkt, in der die Haken 18 nicht in den Weg der Klinke 5 zu greifen vermögen.

Die Wirkungsweise ist folgende. Während des Betriebs führt das Hubmesser 25 eine volle Hin- und Herbewegung aus, während die Antriebswelle 1 nur um 180° dreht (Doppelhub-Verfahren). Bei Fig. 1 ist angenommen, daß Klinke 5 in eingekuppelter Stellung mit dem Ende 61 unter dem in der wirkungslosen, auswärts geschwenkten Position 14a befindlichen Steuerhebel 14, 15 hindurchgelaufen ist. Die Klinke 5 ist dabei durch einen bei 111 drehbar auf dem Exzenter 6 gelagerten, unter Wirkung einer Zugfeder 112 stehenden Riegel 113 verriegelt.

Der Mittelpunkt M von Exzenter 6 und Lasche 7 läuft bei eingekuppelter Klinke 5 auf dem Kreis S (Radius R) um den Mittelpunkt Z der Welle 1. Gleichzeitig läuft die Anschlagrolle 81 auf dem Oval 87 und Anschlagrolle 82 auf dem Oval 88 um (Pfeile 85, 86). In Fig. 1, 2 sind zum Verständnis der Bewegung der Anschlagrollen 81, 82 Zwischenpositionen dieser Rollen angedeutet. Rolle 81 durchläuft eine oberste Stellung C, eine am weitesten rechts befindliche Stellung D, eine unterste Position E und eine am weitesten links befindliche Stellung F. Rolle 82 durchläuft eine oberste Position G eine am weitesten rechts befindliche Stellung H, eine unterste Position J und eine am weitesten links befindliche Stellung K.

Rolle 81 läuft gemäß Fig. 1 gerade auf die Auflaufkante 105 des Steuerhebels 14, 15 auf. Bei der weiteren Bewegung der Teile werden die Steuerhebel 14 bis 17 dadurch wieder in die strichpunktiert angedeutete Position 14a, 16a auswärts verschwenkt. Dadurch wird erzielt, daß der weiterlaufende Riegel 113 nicht gegen den Haken 18 des Steuerhebels 14, 15 schlagen kann.

Diese Sicherungswirkung durch die Rolle 81 besteht, solange diese Rolle den Bogenabschnitt A des Ovals 87 durchläuft. Alsdann gelangt Rolle 81 in den Bereich der Abkröpfung 95, so daß die Steuerhebel 14 bis 17 unter der Wirkung der Feder 55 einwärts verschwenkt werden können (Position 18a des Hakens 18 des Steuerhebels 16, 17). In dieser Stellung ist das Auskuppeln der Klinke 5 möglich, wenn in der Folge die Steuerhebel 14 bis 17 nicht wieder durch das Hubmesser 25 und die Platine 23 in die strichpunktiert dargestellte, wirkungslose Stellung ausgeschwenkt werden.

Bei der folgenden Position der Teile nach Fig. 2 ist angenommen, daß die Steuerhebel 14 bis 17 beim Herannahen des Endes 61 gegen den Haken 18 des Steuerhebels 16, 17 wieder ausgeschwenkt sind (Position 14a, 16a). Die Klinke 5 läuft in eingekuppelter Position unter dem Haken 18 des Hebels 16,17 hindurch. Wenn das Hubmesser 25 seine in Fig. 2 gestrichelt angedeutete, rechte Umkehrposition 25a erreicht, welche der in Fig. 2 ausgezogen dargestellten Stellung der Steuerhebel 14 bis 17 entspricht, läuft die Anschlagrolle 82 gemäß Fig. 2 auf die Auflaufkante 106 des Steuerhebels 16, 17 auf und übernimmt dadurch die bisher durch das Hubmesser 25 vollzogene Antriebsfunktion für die Hebel 14 bis 17. Die beiden Steuerhebel werden am Einwärtsschwenken zwangläufig gehindert und in die strichpunktiert dargestellte Ausschwenkstellung 14a, 16a bewegt. Dadurch wird mit Sicherheit vermieden, daß der Arm 16 bzw. sein Haken 18 beim Passieren des Riegels 113 gegen diesen schlagen kann.

Während die Anschlagrolle 82 den Bogenabschnitt B des Ovals 88 durchläuft, bleiben die Steuerhebel 14 bis 17 auswärtsgeschwenkt (Position 14a, 16a). Anschließend gelangt Rolle 82 in den Bereich der Abkröpfung 96 vom Arm 16. Nunmehr können die Steuerhebel 14 bis 17 unter Wirkung von Feder 55 wieder einwärts geschwenkt werden. Dadurch wird es möglich, daß Klinke 5 beim Auftreffen von Ende 61 auf den Haken 18 des Steuerhebels 14, 15 ausgekuppelt wird, sofern die Steuerhebel nicht wiederum zuvor durch das Hubmesser 25 in die wirkungslose Ausschwenkstellung 14a, 16a gebracht werden.

Dadurch, daß die Anschlagrollen 81 bzw. 82 jeweils etwa im Zeitpunkt der Umkehrposition 25a des Hubmessers 25 auf die Auflaufkante 105 bzw. 106 auflaufen, wird erzielt, daß die Platine 23 anschließend in die Stellung 23a gelangt, in der ein Spiel 114 zwischen ihr und dem Hubmesser 25 besteht. Durch die Rollen 81, 82 wird somit für einen Überhub der Platine 23 gesorgt, der Hub von Hubmesser 25 kann entsprechend gering gehalten und das Hubmesser selbst entlastet werden.

Rollen 81, 82 haben also außer ihrer Sicherheitsfunktion gegenüber den auf dem Exzenter 6 angeordneten Teilen 113, 5 noch die weitere Funktion, jeweils den letzten Abschnitt der Ausschwenkbewegung der Steuerhebel selbsttätig zu übernehmen und dabei zwischen Hubmesser 25 und Platine 23 Spiel herzustellen. Dadurch läßt sich erreichen, daß der zentrale, auf sämtliche Steuerhebel wirkende Krafttrieb des Hubmessers 25 durch einen auf jedes Steuerhebelpaar 14 bis 17 einzeln einwirkenden, seitens der Rollen 81, 82 vollzogenen Antrieb ersetzt wird, und zwar gerade in demjenigen Abschnitt des Arbeitsspieles, wo stärkste Antriebskraft erforderlich ist, weil in diesem Abschnitt stärkste Anspannung der Federn 55 aller Steuerhebel 14 bis 17 erforderlich ist.

Die seitens der Anschlagrollen 81, 82 ausgeübte Sicherheitsausschwenkung der Steuerhebel 14 bis 17 erfolgt übrigens nur in denjenigen Betriebsabschnitten, wo Klinke 5 mit der Antriebswelle 1 eingekuppelt ist und jeweils unter den Haken 18 der Steuerhebel 14 bis 17 hindurchläuft, also nur in Betriebsabschnitten, wo auch tatsächlich das Bedürfnis nach Sicherung der Teile 113, 5 gegen unbeabsichtigtes Einschwenken der Steuerhebel besteht. Ist Klinke 5 von der Welle 1 ausgekuppelt und soll der betreffende Webschaft in seiner bisherigen Position verbleiben (Platine 23 durch Anheben außer Eingriff mit Hubmesser 25), so stehen auch die Teile 6, 7, 81, 82 still und die Sicherheitsausschwenkung der Steuerhebel unterbleibt. Sie ist alsdann auch nicht erforderlich.

Die Anschlagrollen 81, 82 können auch zur Verhinderung etwaiger, weiterer, auf dem Exzenter 6 angeordneter Teile benutzt werden. Hierzu müssen jeweils die Position der Rollen auf der Lasche 7 bzw. die zugehörigen Bogenabschnitte A, B, in denen die Rollen 81, 82 wirksam sind, entsprechend gestaltet werden.

Statt der Anschlagrollen 85, 86 können auf der Lasche 7 auch andere Anschlagelemente, z. B. Zapfen od. dgl. angebracht sein.

**Patentansprüche**

1. Kupplungsanordnung zum Steuern der Schäfte einer Webmaschine, mit einer mindestens eine Nut aufweisenden, intermittierend drehenden Antriebswelle und einer in die Nut einkuppelbaren, auf einem auf der Antriebswelle drehbar gelagerten Exzenter angeordneten Klinke sowie mit einer den Exzenter umschließenden Lasche einer Kurbelstange für den Abtrieb zu den Schäften und mindestens einem in den Weg der Klinke bewegbaren, sie auskuppelnden Steuerhebel, welcher von einer in einen Hubmessertrieb einkuppelbaren Platine hin- und herverschwenkbar ist, dadurch gekennzeichnet, daß die Lasche (7) mindestens ein gegenüber dem in den Weg der Klinke (5) einschwenkbaren Arm (14, 16) des Steuerhebels (14 bis 17) angeordnetes, mit dem Steuerhebel (14 bis 17) zusammenarbeitendes Anschlagelement (81, 82) trägt zum Auswärtshalten des Steuerhebels (14 bis 17) in wirkungsloser Position (14a, 16a) während eines bestimmten Bogenabschnittes (A, B) der Bewegung der Lasche (7).

2. Anordnung nach Anspruch 1, dadurch gekennzeichnet, daß der Steuerhebel (14 bis 17) an dem in den Weg der Klinke (5) einschwenkbaren Arm (14, 16) eine Auflaufkurve (105, 106) für das Anschlagelement (81, 82) der Lasche (7) aufweist.

3. Anordnung nach den Ansprüchen 1 und 2, dadurch gekennzeichnet, daß sich an die Auflaufkurve (105, 106) des Steuerhebels (14 bis 17) eine auswärts gerichtete Abkröpfung (95, 96) zum Beenden der Wirkung des Anschlagelementes (81, 82) anschließt.

4. Anordnung nach Anspruch 1 bis 3, mit zwei Steuerhebeln, dadurch gekennzeichnet, daß die beiden dem Hubmessertrieb (25) zugekehrten Arme (15, 17) der Steuerhebel (14 bis 17) durch ein Gelenk (21) miteinander gekuppelt sind.

**Claims**

1. Clutch arrangement for controlling the heddles of a power loom, with an intermittently rotating drive shaft having at least one slot, and a pawl arranged on an eccentric rotabably mounted on the drive shaft and engagable in the slot, as well as with a link of a connecting rod enclosing the eccentric for delivery tothe heddles and at least one control lever moving into the path of the pawl and disengaging it, which is moved back and forth by a bar engaging a stroke meter drive, characterized in that the link (7) carries at least one stop element (81, 82) arranged opposite the arm (14, 16) of the control lever (14 to 17) swinging into the path of the pawl (5), and cooperating with the control lever (14, to 17) to keep the control lever (14, 61, 17) in inoperative swung-out position (14a, 16a) during a certain arc segment (A, b) of the movement of the link (7).

2. Arrangement according to claim 1, characterized in that the control lever (14 to 17) has lifting flank (105, 106) for the stop element (81, 82) of the link (7) on the arm (14, 16) swinging into the path of the pawl (5).

3. Arrangement according to claims 1 and 2, characterized in that the lifting flank (105, 106) of the control lever (14 to 17) is adjoined by an outwardly direct bend (95, 96) for stopping the action of the stop element (81, 82).

4. Arrangement according to claims 1 to 3, characterized in that the two arms (15, 17) of the control levers (14 to 17) facing the stroke meter drive (25) are coupled with each other by a joint (21).

## Revendications

1. Dispositif d'accouplement pour la commande des cadres d'un métier à tisser, comportant un arbre de commande tournant de façon intermittente et présentant au moins une gorge, et un cliquet qu'on peut accoupler dans la gorge et qui est disposé sur un excentrique monté de façon à pouvoir tourner sur l'arbre de commande, ainsi qu'une patte d'une bielle de manivelle, entourant l'excentrique, pour la prise de force des cadres, et au moins un levier de commande pouvant se déplacer sur le trajet du cliquet et qui débraye ce dernier, le levier de commande pouvant pivoter alternativement par une platine qu'on peut accoupler dans une commande de couteau mobile, caractérisé en ce que la patte (7) porte au moins un élément de butée (81, 82) coopérant avec le levier de commande (14 à 17) et disposé vis-à-vis du bras (14, 16) du levier de commande (14 à 17), qui peut pivoter sur le trajet du cliquet (5), dans le but de maintenir extérieurement le levier de commande (14 à 17) dans une position inactive (14a, 16a) pendant un secteur d'arc (A, B) déterminé du mouvement de la patte (7).

2. Dispositif selon la revendication 1, caractérisé en ce que le levier de commande (14 à 17) présente, sur le bras (14, 16) pouvant pivoter sur le trajet du cliquet (5), une came de contact (105, 106) pour l'élément de butée (81, 82) de la patte (7).

3. Dispositif selon les revendications 1 et 2, caractérisé en ce que sur la came de contact (105, 106) du levier de commande (14 à 17) se raccorde un coude (95, 96) dirigé vers l'extérieur pour terminer l'action de l'élément de butée (81, 82).

4. Dispositif selon la revendication 1 à la revendication 3, comportant deux leviers de commande, caractérisé en ce que les deux bras (15, 17), tournés vers la commande à couteau mobile (25), des leviers de commande (14 à 17), sont couplés l'un à l'autre par une articulation (21).

Fig.1

Fig. 2

0 049 707